(19) Europäisches Patentamt
European Patent Office
Office européen des brevets

(11) **EP 4 020 739 A1**

(12) **EUROPÄISCHE PATENTANMELDUNG**

(43) Veröffentlichungstag:
**29.06.2022  Patentblatt 2022/26**

(21) Anmeldenummer: **20217417.3**

(22) Anmeldetag: **28.12.2020**

(51) Internationale Patentklassifikation (IPC):
*H02J 3/18* (2006.01)    *F03D 7/02* (2006.01)
*F03D 9/25* (2016.01)    *H02J 3/16* (2006.01)
*H02J 3/50* (2006.01)

(52) Gemeinsame Patentklassifikation (CPC):
**H02J 3/18; F03D 7/0284; F03D 7/048; H02J 3/16;
H02J 3/1892; H02J 3/50;** F05B 2260/821;
F05B 2270/1033; F05B 2270/335

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Wobben Properties GmbH
26607 Aurich (DE)**

(72) Erfinder:
• **Emanuel, Hanna
28203 Bremen (DE)**

• **Brombach, Johannes
13437 Berlin (DE)**
• **Strohbücker, Tobias
48145 Münster (DE)**
• **Linder, Andreas Matthias
28203 Bremen (DE)**
• **Fischer, Tobias Sebastian
41352 Korschenbroich (DE)**

(74) Vertreter: **Eisenführ Speiser
Patentanwälte Rechtsanwälte PartGmbB
Postfach 10 60 78
28060 Bremen (DE)**

(54) **VERFAHREN ZUM BESTIMMEN EINER VERLUSTLEISTUNG**

(57)    Die vorliegende Erfindung betrifft ein Verfahren zum Bestimmen einer Verlustleistung (P_V_GES) eines an einem Netzanschlusspunkt (1300) eines elektrischen Versorgungsnetzes (2000) angeschlossenen Windparks (1000), wobei der Windpark (1000) eine Vielzahl von Windenergieanlagen (1100) aufweist, die gemeinsam über ein elektrisches Windparknetz (1200) verbunden sind und jeweils einen Umrichter (1110) zum Einspeisen elektrischer Leistung (P_WEA_i; Q_WEA_i) in das elektrische Windparknetz (1200) aufweisen, umfassend die Schritte: Bestimmen einer verfügbaren Leistung des Windparks (P_avail_WPP), insbesondere unter Berücksichtigung eines vorherrschenden Windes; Bestimmen eines Blindleistungsarbeitspunktes (A_Q_WPP) des Windparks (1000), insbesondere am Netzanschlusspunkt (1300); Bestimmen eines Blindleistungsbedarfes des elektrischen Windparknetzes (Q_PARK_ZUS), insbesondere unter Berücksichtigung der verfügbaren Leistung der Windenergieanlagen (P_avail_WEA_i); Bestimmen zusätzlicher Umrichterverluste der Windenergieanlagen (P_V_LS_i), insbesondere unter Verwendung einer Look-Up-Tabelle; Bestimmen der Verlustleistung des Windparks (P_V_GES) unter Berücksichtigung der bestimmten Umrichterverluste (P_V_LS_i), insbesondere unter Verwendung eines Windparkwiderstandes (R_PARK) oder eines Parkfaktors (k_2).

Fig. 2A

EP 4 020 739 A1

**Beschreibung**

Die vorliegende Erfindung betrifft ein Verfahren zum Bestimmen einer Verlustleistung eines Windparks sowie einen hiermit gesteuerten Windpark.

Windparks weisen üblicherweise eine Vielzahl von Windenergieanlagen auf, die über ein gemeinsames Windparknetz miteinander verbunden sind und über eine Vielzahl von Signalen gesteuert werden, bspw. mittels einer Windparksteuereinheit.

Eines dieser Signale ist die sogenannte verfügbare Leistung, die angibt, wieviel Leistung ein Windpark bzw. eine einzelne Windenergieanlage unter Berücksichtigung eines vorherrschenden Windes produzieren kann.

Mittels dieses Signals der verfügbaren Leistung können Windparks insbesondere ertragsoptimierter betrieben werden, bspw. für die Bereitstellung von Regelleistung und/oder für die Direktvermarktung.

Nachteilig bei bisher bekannten Verfahren zum Bestimmen einer verfügbaren Leistung eines Windparks ist, dass die Berechnung ausschließlich über einen vorherrschenden Wind erfolgt und somit äußerst ungenau sein kann.

Aufgabe der vorliegenden Erfindung ist es daher ein verbessertes Signal für die verfügbare Leistung eines Windparks bereitzustellen, insbesondere soll dieses Signal auch die etwaigen Verluste eines Windparks berücksichtigen.

Erfindungsgemäß wird somit ein Verfahren zum Bestimmen einer Verlustleistung eines an einem Netzanschlusspunkt eines elektrischen Versorgungsnetzes angeschlossenen Windparks vorgeschlagen, wobei der Windpark eine Vielzahl von Windenergieanlagen aufweist, die gemeinsam über ein elektrisches Windparknetz verbunden sind und jeweils einen Umrichter zum Einspeisen elektrischer Leistung in das elektrische Windparknetz aufweisen, umfassend die Schritte: Bestimmen einer verfügbaren Leistung der Windparks, insbesondere unter Berücksichtigung eines vorherrschenden Windes; Bestimmen eines Blindleistungsarbeitspunktes der Windenergieanlagen; Bestimmen eines Blindleistungsbedarfes des elektrischen Windparknetzes, insbesondere Berücksichtigung der verfügbaren Leistung der Windenergieanlagen; Bestimmen zusätzlicher Umrichterverluste der Windenergieanlagen, insbesondere unter Verwendung einer Look-Up-Tabelle; Bestimmen der Verlustleistung des Windparks unter Berücksichtigung der bestimmten Umrichterverluste, insbesondere unter Verwendung eines Windparkwiderstandes oder eines Parkfaktors.

Es wird somit insbesondere vorgeschlagen, die Verluste des Windparknetzes und die Verluste der Umrichter der Windenergieanlagen bei der Bestimmung der Verlustleistung eines Windparks zu berücksichtigen.

Um die Verlustleistung des Windparks zu bestimmen, wird zunächst eine verfügbare Leistung des Windparks bestimmt.

Unter verfügbarer Leistung ist dabei insbesondere jene Leistung einer Windenergieanlage bzw. eines Windparks zu verstehen, die die Windenergieanlage bzw. der Windpark einem elektrischen Versorgungsnetz unter Berücksichtigung eines vorherrschenden Windes zur Verfügung stellen kann. Die verfügbare Leistung kann also auch insbesondere als potentiell mögliche Leistung bzw. potentiell mögliche Ist-Leistung verstanden werden.

Die verfügbare Leistung des Windparks kann bspw.:

- durch Aufsummierung der einzelnen verfügbaren Leistungen der Windenergieanlagen bestimmt werden oder

- aus einer verfügbaren Leistung einer Referenz-Windenergieanlage extrapoliert werden oder

- aus der Nennleistung des Windparks, der eingespeisten Leistung des Windparks und einem vorherrschenden Wind abgeleitet werden.

Bevorzugt wird zum Bestimmen einer verfügbaren Leistung ein vorherrschender Wind verwendet, der bspw. mittels eines Anemometers auf einer Windenergieanlage ermittelt wird.

Aus dem so ermittelten vorherrschenden Wind kann dann bspw. mittels bautechnischer Parameter der Windenergieanlage die verfügbare Leistung der Windenergieanlage berechnet werden.

Alternativ kann die verfügbare Leistung der Windenergieanlage bzw. des Windparks auch aus Betriebsdaten der Windenergieanlage abgeleitet werden, bspw. mittels eines Windschätzers und einer rotoreffektiven Windgeschwindigkeit.

Neben der verfügbaren Leistung des Windparks wird zudem auch ein Blindleistungsarbeitspunkt des Windparks, insbesondere am Netzanschlusspunkt des Windparks, bestimmt.

Der Blindleistungsarbeitspunkt des Windparks kann bspw. aus Sollvorgaben des Netzbetreibers für den Netzanschlusspunkt, insbesondere unter Berücksichtigung einer verfügbaren Leistung des Windparks am Netzanschlusspunkt, bestimmt werden, insbesondere aus:

- einem Blindleistungssollwert für den Windpark am Netzanschlusspunkt oder

- einem cos(phi) für den Windpark am Netzanschlusspunkt oder

- einer Q(U)-Kennlinie für den Windpark am Netzanschlusspunkt, wobei die Q(U)-Kennlinie eine Blindleistungs-Spannungs-Kennlinie für den Windpark am Netzanschlusspunkt ist.

Ferner wird neben der verfügbaren Leistung und dem Blindleistungsarbeitspunkt auch ein Blindleistungsbedarf des elektrischen Windparknetzes bestimmt.

Der Blindleistungsbedarf des elektrischen Windparknetzes kann bspw. über einen Parkwiderstand und/oder über eine Blindleistungsarbeitsgerade und/oder über einen linearisierten Parkfaktor bestimmt werden, der bspw. die Topologie des Windparknetzes widerspiegelt.

Alternativ kann der Blindleistungsbedarf auch über den vom Windpark am Netzanschlusspunkt eingespeisten Strom ermittelt werden.

Bevorzugt wird der Blindleistungsbedarf unter Berücksichtigung der verfügbaren Leistung der Windenergieanlagen ermittelt. Hierfür wird bspw. die verfügbare Leistung mittels einer oder mehrerer Faktoren multipliziert, die die Topologie des Windparknetzes abbilden.

Neben dem Blindleistungsbedarf des Windparknetzes werden auch die Umrichterverluste der Windenergieanlagen bestimmt.

Bevorzugt erfolgt das Bestimmen dieser Umrichterverluste über eine Look-Up-Tabelle. Hierfür wird bspw. ein relativer zusätzlicher Umrichterverlust aufgrund des Blindleistungsarbeitspunktes aus der Look-Up-Tabelle abgelesen und mit der verfügbaren Leistung multipliziert, um die potentiellen absoluten zusätzlichen Verluste zu ermitteln, um diese von der verfügbaren Leistung abzuziehen

Aus den so bestimmten Werten wird abschließend die Verlustleistung des Windparks bestimmt.

Hierfür kann bspw. der Windparkwiderstand oder ein Parkfaktor verwendet werden.

Vorzugsweise erfolgt das Bestimmen der verfügbaren Leistung des Windparks durch Aufsummieren von der verfügbaren Leistung der Windenergieanlagen, bevorzugt mittels einer Windparksteuereinheit.

Die verfügbare Leistung des Windparks wird also insbesondere durch die Summe der verfügbaren Leistungen der Windenergieanlagen abgebildet. Hierfür kann bspw. jede Windenergieanlage selbst ihre verfügbare Leistung bestimmen, diese Werte werden dann zur verfügbaren Leistung der Windenergieanlagen aufsummiert.

Vorzugsweise wird der Blindleistungsarbeitspunkt des Windparks unter Berücksichtigung der bestimmten verfügbaren Leistung der Windenergieanlage und/oder eines Blindleistungssollwertes der Windenergieanlagen und/oder einer Blindleistungs-Spannungskurve bestimmt.

Vorzugsweise erfolgt das Berechnen der zusätzlichen Umrichterverluste der Windenergieanlagen unter Verwendung der verfügbaren Leistung des Windparks und/oder der verfügbaren Leistung der Windenergieanlagen und/oder des bestimmten Blindleistungsarbeitspunktes des Windparks und/oder des berechneten Blindleistungsbedarfes des Windparknetzes.

Vorzugsweise wird die Verlustleistung des Windparks durch eine Berechnung bestimmt, die die bestimmten Umrichterverluste mit einem Parkfaktor multipliziert oder einem Quadrat eines am Netzanschluss eingespeisten Stromes multipliziert mit einem Windparkwiderstand multipliziert mit einem Leistungsfaktor des Windparks.

Erfindungsgemäß wird ferner ein Verfahren zum Bestimmen einerverfügbaren Leistung eines, eine Vielzahl von Windenergieanlagen aufweisenden Windparks vorgeschlagen, umfassend die Schritte: Bestimmen einer verfügbaren Leistung der Windenergieanlagen unter Berücksichtigung eines vorherrschenden Windes; Berechnen der verfügbaren Leistung des Windparks unter Verwendung der verfügbaren Wirkleistung derWindenergieanlagen und einer Verlustleistung des Windparks, die mit einem vorstehend oder nachstehend beschriebenen Verfahren bestimmt wurde.

Es wird also insbesondere vorgeschlagen, aus der vorstehend oder nachstehend beschriebenen und ermittelten Verlustleistung des Windparks die verfügbare Leistung des Windparks zu berechnen.

Diese so ermittelte verfügbare Leistung des Windparks ist um ein vielfaches genauer als bisher bekannte Verfahren und kann bspw. an einen Netzbetreiber für die Bereitstellung von Regelleistung und/oder für die Direktvermarktung übermittelt werden.

Hierdurch können Windparks ertragsoptimierter betrieben werden, insbesondere, da mit den vorstehend oder nachstehend beschriebenen Verfahren die Arbeitspunkte eines Windparks genauer beschrieben werden können.

Erfindungsgemäß wird ferner auch ein Verfahren zum Steuern eines Windparks vorgeschlagen, umfassend die Schritte: Steuern des Windparks unter Berücksichtigung einer verfügbaren Leistung des Windparks, die nach einem vorstehend oder nachstehend beschriebenen Verfahren ermittelt wurde.

Es wird somit insbesondere auch vorgeschlagen, Windparks unter Berücksichtigung einer so ermittelten verfügbaren Leistung zu betreiben, insbesondere ertragsoptimiert zu betreiben.

Erfindungsgemäß wird ferner ein Windpark vorgeschlagen, der eine Vielzahl von Windenergieanlagen und eine Windparksteuereinheit umfasst, wobei die Windparksteuereinheit dazu eingerichtet ist, wenigstens eines der vorstehend oder nachstehend beschriebenen Verfahren auszuführen.

Der Windpark weist also bspw. eine Vielzahl von Windenergieanlagen auf, die über ein gemeinsames Windparknetz miteinander verbunden sind.

Bevorzugt weisen diese Windenergieanlagen jeweils einen Umrichter auf, mittels dem die Windenergieanlagen elektrische Leistung in das elektrische Windparknetz einspeisen.

Weiter bevorzugt weisen die Windenergieanlagen zudem wenigstens eine Windenergieanlagensteuereinheit auf, mittels derer die Windenergieanlage gesteuert wird.

Bevorzugt ist der Windpark zudem über einen Transformator, insbesondere am Netzanschlusspunkt, mit dem elektrischen Versorgungsnetz verbunden.

Weiter bevorzugt weist der Windpark ferner eine Windparksteuereinheit auf, die dazu eingerichtet ist, die Windenergieanlagen über die Windenergieanlagensteuereinheiten zu steuern.

Vorzugsweise weist die Windparksteuereinheit zudem wenigstens eine Look-Up-Tabelle auf.

Die Look-Up-Tabelle ist dabei insbesondere so aufgebaut, dass ein relativer Arbeitspunkt der Wirkleistung (vorzugsweise in 1 % Schritten) und ein relativer Arbeitspunkt der Blindleistung (vorzugsweise in 1 % Schritten) abgelesen werden können, insbesondere, um im Ergebnis die zusätzlichen relativen Verluste aufgrund des Blindleistungsarbeitspunktes zu bestimmen.

Die Look-Up-Tabelle kann bspw. über Messungen am Umrichterschrank einer bzw. der Windenergieanlagen oder über Modelle bestimmt werden.

Die vorliegende Erfindung wird nun nachfolgend exemplarisch und anhand von Ausführungsbeispielen unter Bezugnahme auf die begleitenden Figuren näher erläutert, wobei für gleiche oder ähnliche Bauteile gleiche Bezugszeichen verwendet werden. Hierbei zeigen:

Fig. 1    schematisch und exemplarisch eine perspektivische Ansicht einer Windenergieanlage in einer Ausführungsform;

Fig. 2A    schematisch und exemplarisch den Aufbau eines Windparks;

Fig. 2B    schematisch und exemplarisch den Ablauf eines erfindungsgemäßen Verfahrens zum Bestimmen einer verfügbaren Leistung eines Windparks;

Fig. 2C    schematisch und exemplarisch eine Look-Up-Tabelle, welche in einem Verfahren zum Bestimmen einer verfügbaren Leistung eines Windparks verwendet wird.

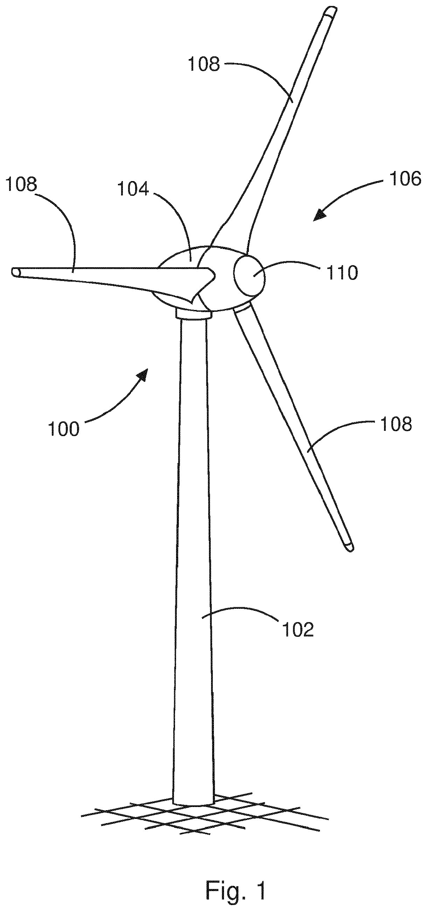

Fig.1 zeigt schematisch und exemplarisch eine perspektivische Ansicht einer Windenergieanlage 100 in einer Ausführungsform.

Die Windenergieanlage 100 weist einen Turm 102 und eine Gondel 104 auf.

An der Gondel 104 ist ein aerodynamischer Rotor 106 mit drei Rotorblättern 108 und einem Spinner 110 angeordnet.

Der Rotor 106 wird im Betrieb durch den Wind in eine Drehbewegung versetzt und treibt dadurch einen Generator in der Gondel an.

Der Generator erzeugt hierdurch einen einzuspeisenden Strom, der mittels eines Umrichters in ein elektrisches Windparknetz oder ein elektrisches Versorgungsnetz eingespeist wird.

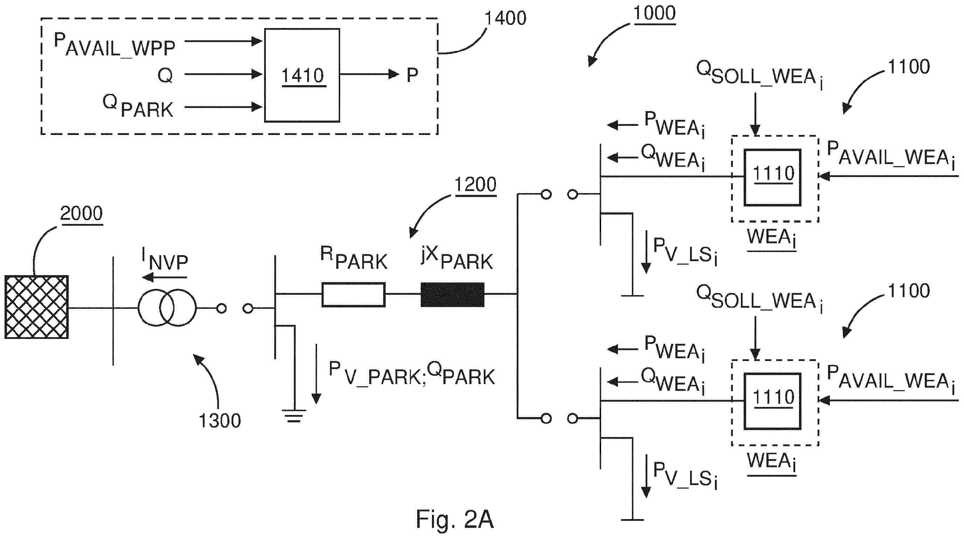

Fig. 2A zeigt schematisch und exemplarisch den Aufbau eines Windparks.

Der Windpark 1000 weist eine Vielzahl von Windenergieanlagen 1100 auf, die über ein gemeinsames Windparknetz 1200 miteinander verbunden sind.

Der Windpark 1000 ist über einen Netzanschlusspunkt 1300 mit einem elektrischen Versorgungsnetz 2000 verbunden und wird mittels einer Windparksteuereinheit 1400 gesteuert, die eine Look-Up-Tabelle 1410 aufweist.

Die Windenergieanlagen 1000 (kurz: WEA_i) werden durch die Windparksteuereinheit 1400 über eine Windenergieanlagensteuereinheit mittels eines Blindleistungssollwertes Q_SOLL_WEA_i gesteuert und erzeugen hierdurch jeweils eine elektrische Wirkleistung P_WEA_i und eine elektrische Blindleistung Q_WEA_i.

Diese so erzeugten Wirk- und Blindleistungen P_WEA_i, Q_WEA_i werden über einen Umrichter in das elektrische Windparknetz 1200 verlustbehaftet eingespeist, d.h. der Umrichter erzeugt einen Umrichterverluster P_V_LS_i.

Je nach vorherrschendem Wind, weist jede Windenergieanlage zudem eine verfügbare Leistung P_AVAIL_WEA_i auf, die auch als verfügbare Windenergieanlagenleistung bezeichnet werden kann.

Die verfügbare Windenergieanlagenleistung P_AVAIL_WEA_i liegt zumeist über der erzeugten Leistungen P_WEA_i.

Die von den Windenergieanlagen 1100 so erzeugten Leistungen P_WEA_i, Q_WEA_i werden über das elektrische Windparknetz 1200, und insbesondere am Netzanschlusspunkt 1300 über einen Transformator, in Form eines einzuspeisenden Windparkstromes I_NVP, in das elektrische Versorgungsnetz 2000 verlustbehaftet eingespeist, d.h. insbesondere, dass das Windparknetz einen Blindleistungsbedarf Q_PARK_ZUS mit einer Verlustleitung P_V_PARK aufweist.

Das Windparknetz selbst kann hier durch einen Windparkwiderstand R_PARK, jX_PARK beschrieben werden.

Zum Steuern des Windparks 1000 wird eine Windparksteuereinheit 1400 verwendet, die dazu eingerichtet ist, über die Windenergieanlagensteuereinheit mit den einzelnen Windenergieanlagen zu kommunizieren und diesen Sollwert, wie bspw. einem Blindleistungssollwert Q_SOLL_WEA_i zu übergeben.

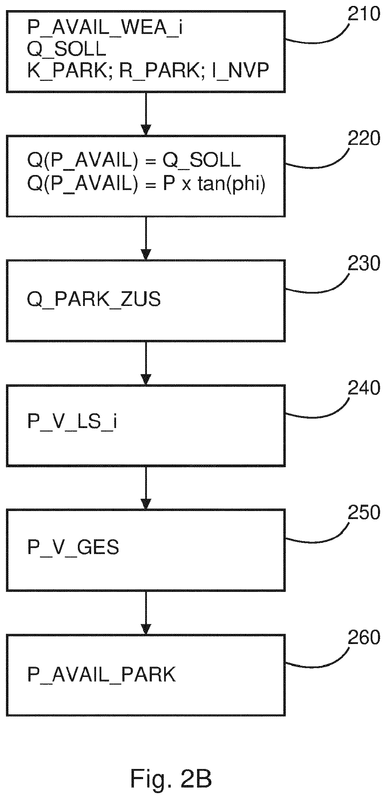

Fig. 2B zeigt schematisch und exemplarisch den Ablauf 200 eines erfindungsgemäßen Verfahrens zum Bestimmen einer verfügbaren Leistung eines Windparks gemäß einer Ausführungsform.

In einem ersten Schritt 210 wird die verfügbare Leistung des Windparks, insbesondere aller Windenergieanlagen P_AVAIL_WEA_i, eine Blindleistungsfahrweise, wie bspw. Q_SOLL, sowie ein Parkfaktor k_PARK oder der Windparkwiderstand R_PARK oder der am Netzanschlusspunkt einzuspeisende Stom I_NVP bestimmt.

In einem nächsten Schritt 220 wird der Blindleistungsarbeitspunkt der Windenergieanlagen Q bestimmt, dieser Blindleistungsarbeitspunkt ist insbesondere der Blindleistungsarbeitspunkt der Windenergieanlagen A_Q_WEA_i.

Der Blindleistungsarbeitspunkt A_Q_WEA_i wird insbesondere in Abhängigkeit der verfügbaren Leistung P_AVAIL bestimmt, also der verfügbaren Leistung der Windenergieanlagen P_AVAIL_WEA_i., bspw. durch eine der folgenden Annahmen:

$$Q(P\_AVAIL) = Q(P\_AVAIL\_WEA\_i) = Q\_SOLL;$$

$$Q(P\_AVAIL) = Q(P\_AVAIL\_WEA\_i) = P \times \tan(phi);$$

$$Q(P\_AVAIL) = Q(P\_AVAIL\_WEA\_i) = Q(U)\text{-Kurve}.$$

In einem nächsten Schritt wird der Blindleistungsbedarf des elektrischen Windparknetzes Q_PARK_ZUS bestimmt, bspw. durch eine linearisierte Gleichung, wie:

$$Q\_PARK\_ZUS = P\_AVAIL\_WEA\_i * k\_1 * 0{,}05 - 0{,}01 * k\_2,$$

wobei k_1 und k_2 Faktoren zur Linearisierung des Windparks sind.

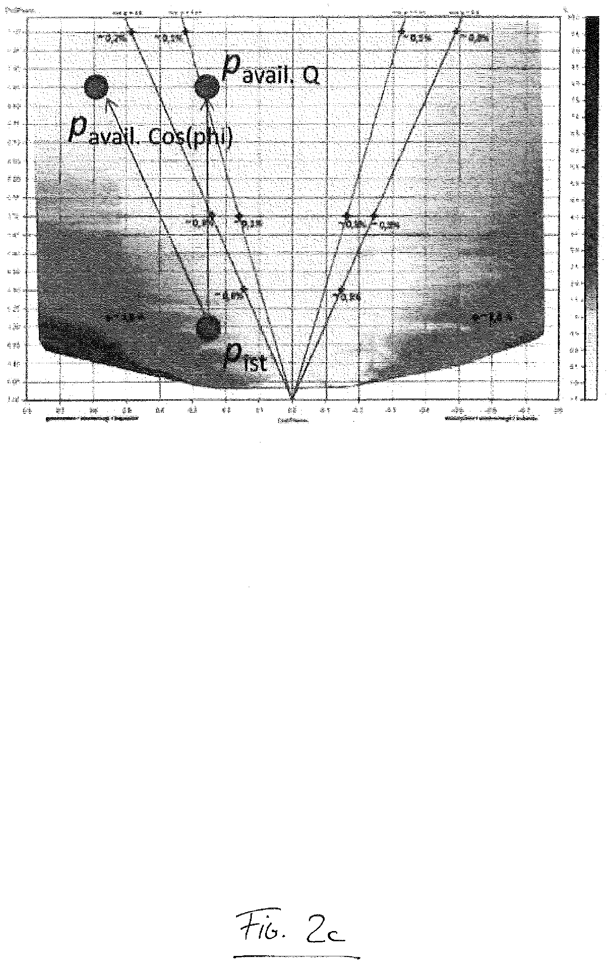

In einem nächsten Schritt 240 werden die Umrichterverluste der Windenergieanlagen P_V_LS_i mittels der vorstehend oder nachstehend beschriebenen Look-Up-Tabelle 1410, wie bspw. in Figur 2C beschrieben, bestimmt.

Hierzu werden insbesondere die relativen zusätzlichen (blindleistungsbedingten) Verluste p mit der verfügbaren Leistung der Windenergieanlagen P_AVAIL_WEA_i, dem Blindleistungsarbeitspunkt der Windenergieanlagen A_Q_WEA_i und des Blindleistungsbedarfes des elektrischen Windparknetzes Q_PARK_ZUS aus der Look-Up-Tabelle abgelesen.

Die relativen zusätzlichen (blindleistungsbedingten) Verluste p werden anschließend mit der verfügbaren Leistung der Windenergieanlagen P_AVAIL_WEA_i multipliziert, um die absoluten Verluste der Umrichter P_V_LS_i zu bestimmen, also mit:

$$P\_V\_LS\_i = P\_AVAIL\_WEA\_i * p.$$

Anschließend wird in einem nächsten Schritt 250 die Verlustleistung des Windparks P_V_GES unter Berücksichtigung der bestimmten Umrichterverluste P_V_LS_i bestimmt, bspw. durch:

$$P\_V\_GES = P\_V\_LS\_i * k\_3,$$

wobei k_3 ein Parkfaktor ist, der eine Topologie des Windparks widergibt.

Alternativ können die Verluste auch über den Parkwiderstand R_PARK durch den einzuspeisenden Strom I_NVP bestimmt werden, also über die Gleichung:

$$P\_PARK = I\_NVP{}^2 * R\_PARK * \cos(phi).$$

Abschließend wird in einem letzten Schritt 260 die verfügbare Leistung des Windparks P_AVAIL_Park bestimmt, insbesondere über die Gleichung:

$$P\_AVAIL\_PARK = P\_AVAIL\_WEA\_i - P\_V\_GES.$$

Fig. 2C zeigt schematisch und exemplarisch eine Look-Up-Tabelle 1410, welche in einem Verfahren zum Bestimmen einer verfügbaren Leistung eines Windparks verwendet wird.

Die Look-Up Tabelle 1410 ist insbesondere als graphische Wiedergabe einer Vielzahl von diskreten Wertepaaren anzusehen. Auf der Ordinate ist die Blindleistung, insbesondere in p.u., abgetragen und auf der Abzisse ist die Wirkleistung, insbesondere in p.u., abgetragen.

Die Look-Up-Tabelle ist dabei insbesondere so aufgebaut, dass ein relativer Arbeitspunkt der Wirkleistung (vorzugsweise in 1 % Schritten) und ein relativer Arbeitspunkt der Blindleistung (vorzugsweise in 1 % Schritten) abgelesen werden können, insbesondere um im Ergebnis die zusätzlichen relativen Verluste aufgrund des Blindleistungsarbeitspunktes zu bestimmen.

Die Look-Up-Tabelle kann bspw. über Messungen am Umrichterschrank einer bzw. der Windenergieanlagen oder über Modelle bestimmt werden.

Der Arbeitspunkt p_ist bildet dabei insbesondere den Arbeitspunkt eines eingesenkten Windparks ab.

Der Arbeitspunkt p_avail_cos(phi) bildet dabei insbesondere den Arbeitspunkt des Windparks bei cos(phi)-Fahrweise ab.

Der Arbeitspunkt p_avail_Q bildet dabei insbesondere den Arbeitspunkt des Windparks bei einer konstanten Blindleistungs-Fahrweise ab.

Im Ergebnis können die zusätzlichen relativen Verluste aufgrund des Blindleistungsarbeitspunktes durch die Look-Up-Tabelle 1410 bestimmt werden.

Auch wird durch die Look-Up-Tabelle 1410 gezeigt, dass die relativen Verluste stark vom Arbeitspunkt abhängen.

Die in Fig. 2C angedeuteten Geraden zeigen den Verlauf für entsprechende Blindleistungsarbeitspunkte bei cos(phi) = 0,9 bzw. 0,95.

Bezugszeichenliste

| | |
|---|---|
| 100 | Windenergieanlage |
| 1000 | Windpark |
| 1100 | Windenergieanlage, insbesondere des Windparks |
| 1110 | Umrichter, insbesondere der Windenergieanlage |
| 1200 | Windparknetz, insbesondere des Windparks |
| 1300 | Netzanschlusspunkt, insbesondere des Windparks |
| 1400 | Windparksteuereinheit, insbesondere des Windparks |
| 1410 | Look-Up-Tabelle, insbesondere der Windparksteuereinheit |
| 2000 | elektrisches Versorgungsnetz |
| A_Q_WEA_i | Blindleistungsarbeitungspunkt der Windenergieanlagen |
| A_Q_WPP | Blindleistungsarbeitspunkt des Windparks |
| FCU | Windparksteuereinheit |
| Q(F)_NVP | Blindleistungsfahrweise am Netzanschlusspunkt |
| Q(U) | Blindleistungs-Spannungskurve |
| GRID | elektrisches Versorgungsnetz |
| I_NVP | eingespeister Strom des Windparks am Netzanschlusspunkt |
| jX_PARK | Windparkwiderstand, Imaginärteil |
| k_1, 2, 3, ... | Faktor |
| LS_i | Umrichter einer Windenergieanlage |
| NVP | Netzanschlusspunkt |
| p | relative Verluste |
| PARK | elektrisches Windparknetz |
| P_WEA_i | elektrische Wirkleistung einer Windenergieanlage |
| P_avail_WEA_i | verfügbare Leistung der Windenergieanlage |
| P_avail_PARK | verfügbare Leistung des Windparks |
| P_V_LS_i | Umrichterverluste der Windenergieanlagen |

| P_V_GES | Verlustleistung des Windparks |
|---|---|
| P_V_PARK | Verlustleitung des Windparknetzes |
| Q_Soll_WEA_i | Blindleistungssollwert der Windenergieanlage |
| Q_WEA_i | elektrische Blindleistung einer Windenergieanlage |
| Q_PARK | Blindleistungsbedarf des elektrischen Windparknetzes |
| R_PARK | Windparkwiderstand, Realteil |
| WEA_i | Windenergieanlage |
| WPP | Windpark |

**Patentansprüche**

1.  Verfahren zum Bestimmen einer Verlustleistung (P_V_GES) eines an einem Netzanschlusspunkt (1300) eines elektrischen Versorgungsnetzes (2000) angeschlossenen Windparks (1000), wobei der Windpark (1000) eine Vielzahl von Windenergieanlagen (1100) aufweist, die gemeinsam über ein elektrisches Windparknetz (1200) verbunden sind und jeweils einen Umrichter (1110) zum Einspeisen elektrischer Leistung (P_WEA_i; Q_WEA_i) in das elektrische Windparknetz (1200) aufweisen, umfassend die Schritte:

    - Bestimmen einer verfügbaren Leistung des Windparks (P_avail_WPP), insbesondere unter Berücksichtigung eines vorherrschenden Windes;
    - Bestimmen eines Blindleistungsarbeitspunktes (A_Q_WPP) des Windparks (1000), insbesondere am Netzanschlusspunkt (1300);
    - Bestimmen eines Blindleistungsbedarfes des elektrischen Windparknetzes (Q_PARK_ZUS), insbesondere unter Berücksichtigung der verfügbaren Leistung der Windenergieanlagen (P_avail_WEA_i);
    - Bestimmen zusätzlicher Umrichterverluste der Windenergieanlagen (P_V_LS_i), insbesondere unter Verwendung einer Look-Up-Tabelle;
    - Bestimmen der Verlustleistung des Windparks (P_V_GES) unter Berücksichtigung der bestimmten Umrichterverluste (P_V_LS_i), insbesondere unter Verwendung eines Windparkwiderstandes (R_PARK) oder eines Parkfaktors (k_2).

2.  Verfahren zum Bestimmen einer Verlustleistung nach Anspruch 1, wobei

    - das Bestimmen der verfügbaren Leistung des Windparks (P_avail_WPP) durch Aufsummieren von verfügbaren Leistungen der Windenergieanlagen (1100), bevorzugt mittels einer Windparksteuereinheit (FCU).

3.  Verfahren zum Bestimmen einer Verlustleistung nach Anspruch 1 oder 2, wobei

    - der Blindleistungsarbeitspunkt des Windparks (A_Q_WPP) unter Berücksichtigung eines der folgenden Liste bestimmt wird, umfassend:

        - der bestimmten verfügbaren Leistung der Windenergieanlage (P_avail_WEA_i) und/oder
        - eines Blindleistungssollwertes der Windenergieanlagen (Q_soll_WEA_i) und/oder
        - einer Blindleistungs-Spannungskurve (Q(U));

4.  Verfahren zum Bestimmen einer Verlustleistung nach einem der vorstehenden Ansprüche, wobei

    - das Berechnen der zusätzlichen Umrichterverluste der einzelnen Windenergieanlagen (P_V_LS_i) unter Verwendung wenigstens eines der nachfolgenden Liste erfolgt, umfassend:

        - der verfügbaren Leistung des Windparks (P_avail_WPP) und/oder
        - der verfügbaren Leistung der Windenergieanlagen (P_avail_WEA_i) und/oder
        - des bestimmten Blindleistungsarbeitspunktes des Windparks (A_Q_WPP;) und/oder
        - des berechneten Blindleistungsbedarfes des Windparknetzes (Q_PARK_ZUS).

5.  Verfahren zum Bestimmen einer Verlustleistung nach einem der vorstehenden Ansprüche, wobei die Verlustleistung des Windparks (P_V_GES) bestimmt wird durch eine Berechnung, nämlich:

    - die bestimmten Umrichterverluste (P_V_LS_i) mal einem Parkfaktor (k2)

oder

- einem Quadrat eines am Netzanschluss eingespeisten Stromes ($I\_NVP^2$) mal einem Windparkwiderstand (R_PARK) mal einem Leistungsfaktor des Windparks (k_PARK).

6. Verfahren zum Bestimmen einer verfügbaren Leistung eines, eine Vielzahl von Windenergieanlagen aufweisenden Windparks (P_avail_Park), umfassend die Schritte:

   - Bestimmen einer verfügbaren Leistung der Windenergieanlage (P_avail_WEA_i) unter Berücksichtigung eines vorherrschenden Windes,
   - Berechnen der verfügbaren Leistung des Windparks (P_avail_Park) unter Verwendung der verfügbaren Wirkleistung (P_avail_wea_i) der Windenergieanlagen und einer Verlustleistung des Windparks (P_V_GES), die mit einem Verfahren nach einem der Ansprüche 1 bis 5 bestimmt wurde.

7. Verfahren zum Steuern eines Windparks, umfassend die Schritte:

   - Steuern des Windparks unter Berücksichtigung einer verfügbaren Leistung (P_avail_Park) des Windparks, die nach einem Verfahren nach Anspruch 6 berechnet wurde.

8. Windpark (1000) umfassend eine Vielzahl von Windenergieanlagen (1100) und eine Windparksteuereinheit (1200), wobei die Windparksteuereinheit dazu eingerichtet ist, ein Verfahren nach einem der Ansprüche 1 bis 6 und/oder 7 auszuführen.

9. Windpark (1000) nach einem der vorstehenden Ansprüche, wobei die Windparksteuereinheit eine Look-Up-Tabelle aufweist.

Fig. 1

Fig. 2A

P_AVAIL_WEA_i
Q_SOLL
K_PARK; R_PARK; I_NVP — 210

↓

Q(P_AVAIL) = Q_SOLL
Q(P_AVAIL) = P x tan(phi) — 220

↓

Q_PARK_ZUS — 230

↓

P_V_LS_i — 240

↓

P_V_GES — 250

↓

P_AVAIL_PARK — 260

Fig. 2B

FIG. 2c

Europäisches
Patentamt

European
Patent Office

Office européen
des brevets

**EUROPÄISCHER RECHERCHENBERICHT**

Nummer der Anmeldung

EP 20 21 7417

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | EP 2 445 077 A1 (ADENSIS GMBH [DE]) 25. April 2012 (2012-04-25) * Absätze [0003] - [0036], [0046]; Anspruch 11; Abbildungen 1-4 * ----- | 1-9 | INV. H02J3/18 F03D7/02 F03D9/25 H02J3/16 H02J3/50 |
| Y | EP 3 171 477 A1 (HITACHI LTD [JP]) 24. Mai 2017 (2017-05-24) * Absätze [0009] - [0012], [0021], [0026], [0037] - [0047]; Abbildungen 1,2,7,11,12 * ----- | 1-9 | |
| A | EP 3 407 480 A1 (SIEMENS AG [DE]) 28. November 2018 (2018-11-28) * Absätze [0004] - [0011], [0016]; Anspruch 6 * ----- | 1 | |
| A | DE 10 2007 041793 A1 (INST SOLARE ENERGIEVERSORGUNGSTECHNIK ISET [DE]) 5. März 2009 (2009-03-05) * Absätze [0003] - [0005]; Abbildungen 1-14 * ----- | 1 | |
| A | CN 107 947 183 B (UNIV NORTH CHINA ELECTRIC POWER) 22. September 2020 (2020-09-22) * Absätze [0004] - [0120]; Abbildungen 1-3 * ----- | 1 | **RECHERCHIERTE SACHGEBIETE (IPC)** H02J F03D |

Der vorliegende Recherchenbericht wurde für alle Patentansprüche erstellt

| Recherchenort | Abschlußdatum der Recherche | Prüfer |
|---|---|---|
| München | 10. Juni 2021 | Krasser, Bernhard |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 21 7417

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-06-2021

| Im Recherchenbericht angeführtes Patentdokument | Datum der Veröffentlichung | Mitglied(er) der Patentfamilie | Datum der Veröffentlichung |
|---|---|---|---|
| EP 2445077 A1 | 25-04-2012 | DE 102010047652 A1 | 12-04-2012 |
| | | DK 3358693 T3 | 02-11-2020 |
| | | EP 2445077 A1 | 25-04-2012 |
| | | EP 3358693 A1 | 08-08-2018 |
| | | ES 2660232 T3 | 21-03-2018 |
| | | ES 2829262 T3 | 31-05-2021 |
| | | PL 2445077 T3 | 30-05-2018 |
| | | US 2012091805 A1 | 19-04-2012 |
| | | US 2018138715 A1 | 17-05-2018 |
| EP 3171477 A1 | 24-05-2017 | EP 3171477 A1 | 24-05-2017 |
| | | JP 6483006 B2 | 13-03-2019 |
| | | JP 2017099039 A | 01-06-2017 |
| EP 3407480 A1 | 28-11-2018 | KEINE | |
| DE 102007041793 A1 | 05-03-2009 | KEINE | |
| CN 107947183 B | 22-09-2020 | KEINE | |

Für nähere Einzelheiten zu diesem Anhang : siehe Amtsblatt des Europäischen Patentamts, Nr.12/82